Europäisches Patentamt

(19) European Patent Office

Office européen des brevets

(11) Publication number: **0 146 973**

**B1**

(12) **EUROPEAN PATENT SPECIFICATION**

(45) Date of publication of patent specification: **08.11.89**

(51) Int. Cl.⁴: **C 09 K 11/85**, G 21 K 4/00

(21) Application number: **84116482.5**

(22) Date of filing: **28.12.84**

(54) **Phosphor and radiation image storage panel employing the same.**

(30) Priority: **28.12.83 JP 247316/83**

(43) Date of publication of application:
**03.07.85 Bulletin 85/27**

(45) Publication of the grant of the patent:
**08.11.89 Bulletin 89/45**

(84) Designated Contracting States:
**DE FR NL**

(56) References cited:
**EP-A-0 083 085**

(73) Proprietor: **FUJI PHOTO FILM CO., LTD.**
**210 Nakanuma Minami Ashigara-shi**
**Kanagawa 250-01 (JP)**

(72) Inventor: **Mori, Nobufumi c/o Fuji Photo Film**
**Co., Ltd.**
**No. 798, Miyanodai Kaisei-machi**
**Ashigara-kami-gun Kanagawa (JP)**
Inventor: **Umemoto, Chiyuki c/o Fuji Photo Film**
**Co., Ltd.**
**No. 798, Miyanodai Kaisei-machi**
**Ashigara-kami-gun Kanagawa (JP)**
Inventor: **Takahashi, Kenji c/o Fuji Photo Film**
**Co., Ltd.**
**No. 798, Miyanodai Kaisei-machi**
**Ashigara-kami-gun Kanagawa (JP)**

(74) Representative: **Patentanwälte Grünecker,**
**Kinkeldey, Stockmair & Partner**
**Maximilianstrasse 58**
**D-8000 München 22 (DE)**

Courier Press, Leamington Spa, England.

## Description

### Background of the invention
### Field of the invention

This invention relates to a phosphor and a radiation image storage panel employing the same, and more particularly, to a divalent europium activated barium fluorohalide phosphor containing a small amount of scandium and a radiation image storage panel employing the same.

### Description of the prior art

EP—A—0 083 085 describes a divalent europium activated barium fluorohalide phosphor $BaFX \cdot aNaX':xEu^{2+}$, in which X and X' are at least one of Cl, Br and I, a is a number satisfying $0<a\leqslant 10^{-1}$, and x is a number satisfying $0<x\leqslant 0.2$. The phosphor absorbs and stores a portion of radiation energy when exposed to a radiation such as X-rays, and emits light in the near ultraviolet to blue region when excited with an electromagnetic wave within a wavelength region of 450—1100 nm after exposure to the radiation, that is, the phosphor shows stimulated emission (the peak wavelength of the stimulated emission is within the region of approx. 385—425 nm depending upon the kind of halogen which is a component of the phosphor). In particular, the divalent europium activated barium fluorohalide phosphor has been paid much attention and investigated as a stimulable phosphor employable for a radiation image storage panel (i.e., stimulable phosphor sheet) which is used in a radiation image recording and reproducing method utilizing the stimulability thereof.

A radiation image storage panel has a basic structure comprising a support and at least one phosphor layer provided on one surface of the support which comprises a binder and a stimulable phosphor dispersed therein. Further, a transparent protective film is generally provided on the free surface (surface not facing the support) of the phosphor layer to keep the phosphor layer from chemical deterioration or physical shock.

The radiation image recording and reproducing method using the above-described radiation image storage panel comprising the stimulable phosphor is a very advantageous method replacing the conventional radiography. As described, for example, in U.S. Patent No. 4,239,968, the method involves steps of causing the stimulable phosphor of the panel to absorb radiation energy having passed through an object or having radiated from an object; exciting the stimulable phosphor with an electromagnetic wave such as visible light and infrared rays (hereinafter referred to as "stimulating rays") to sequentially release the radiation energy stored in the stimulable phosphor as light emission (stimulated emission); photoelectrically detecting (reading out) the emitted light to obtain electric signals; and reproducing a visible image from the electric signals on a recording material such as a photosensitive film or on a display device such as CRT.

In the radiation image recording and reproducing method, a radiation image can be obtained with a sufficient amount of information by applying a radiation to the object at considerably smaller dose, as compared with the case of using the conventional radiography. Accordingly, this radiation image recording and reproducing method is of great value especially when the method is used for medical diagnosis.

The operation of reading out the radiation energy stored in the radiation image storage panel in the above-described method is generally carried out by the steps of scanning the panel with a laser beam (stimulating rays) to sequentially excite the stimulable phosphor so as to release the radiation energy stored therein as light emission and detecting the light by a photosensor such as a photomultiplier.

In the last step of the read-out operation, the light which is continuously emitted by the stimulable phosphor of the radiation image storage panel after terminating the excitation with stimulating rays (namely, afterglow of stimulated emission) causes the decrease of S/N ratio of the resulting image. More in detail, the afterglow given by the phosphor particles other than the phosphor particles aimed to excite is detected as the light emitted by the aimed ones in the case that the phosphor gives afterglow in a relatively high ratio to the amount of the stimulated emission. As a result, the image provided by the radiation image storage panel comprising such a stimulable phosphor tends to be deteriorated on the image quality (sharpness, density resolution).

The afterglow characteristics of the panel varies depending not only on the employed stimulable phosphor but also on the intensity of stimulating rays, the scanning speed in the case of using a laser beam as the stimulating rays. In practical use, the influence of afterglow on the image quality further varies depending upon the detecting procedure of stimulated emission. Nevertheless, it is of great value to improve the afterglow characteristics of the panel which give an adverse effect to the image quality, even if the improvement is not so high.

As described in Japanese Patent Provisional Publication No. 59(1984)-56479, the above-mentioned divalent europium activated barium fluorohalide phosphor is improved in the luminance of stimulated emission by incorporating a specific amount of sodium halide thereinto. More in detail, the divalent europium activated barium fluorohalide phosphor containing sodium halide and having the formula:

$$BaFX \cdot aNaX':xEu^{2+}$$

in which each of X and X' is at least one halogen selected from the group consisting of Cl, Br and I; and $a$ and $x$ are numbers satisfying the conditions of $0<a\leqq 2.0$ and $0<x\leqq 0.2$, respectively, gives stimulated emission of higher luminance than the divalent europium activated barium fluorohalide phosphor containing no sodium halide. However, the incorporation of sodium halide into the divalent europium activated barium fluorohalide phosphor tends to deteriorate the afterglow characteristics of stimulated emission thereof. The divalent europium activated barium fluorohalide phosphor containing sodium halide with the above formula is desired to be improved in the afterglow characteristics.

Summary of the invention

It is an object of the present invention to provide a divalent europium activated barium fluorohalide phosphor containing sodium halide which is improved in the afterglow given after termination of the excitation with stimulating rays.

It is another object of the present invention to provide a radiation image storage panel employing said phosphor which is improved in the quality of the image provided thereby.

The present inventors have studied on the divalent europium activated barium fluorohalide phosphor containing sodium halide, and as a result, they have found that the afterglow characteristics of the phosphor which further contains scandium within a specific amount range can be remarkably improved, to accomplish the invention.

The phosphor of the present invention is a divalent europium activated barium fluorohalide phosphor containing the specific amount of sodium halide and scandium and having the formula (I):

$$BaFX \cdot aNaX':xEu^{2+},ySc \qquad (I)$$

in which each of X and X' is at least one halogen selected from the group consisting of Cl, Br and I; and $a$, $x$ and $y$ are numbers satisfying the conditions of $0<a\leqq2.0$, $0<x\leqq0.2$ and $10^{-3}\leqq y\leqq10^{-1}$, respectively.

The radiation image storage panel of the present invention comprises a support and a stimulable phosphor layer provided thereon, in which the stimulable phosphor layer contains the divalent europium activated barium fluorohalide phosphor having the above formula (I).

More in detail, the invention is accomplished on the finding that the divalent europium activated barium fluorohalide phosphor having the above formula (I) has the prominently improved afterglow characteristics particularly in a period of $10^{-3}$—$10^{-2}$s. after excitation with stimulating rays.

Accordingly, an image of high quality can be stably obtained in the radiation image recording and reproducing method by using the radiation image storage panel of the present invention employing the above-mentioned divalent europium activated barium fluorohalide phosphor.

Brief description of the drawings

Figure 1 graphically shows the afterglow characteristics of a radiation image storage panel containing

$$BaFBr \cdot 0.0023NaBr:0.001Eu^{2+},0.005Sc$$

phosphor according to the present invention (dotted curve), and of a radiation image storage panel for comparison containing

$$BaFBr \cdot 0.0023NaBr:0.001Eu^{2+}$$

phosphor (solid curve).

Figure 2 graphically shows a relationship between an amount of scandium ($y$ value) and a relative amount of afterglow with respect to the radiation image storage panel containing

$$BaFBr \cdot 0.0023NaBr:0.001Eu^{2+},ySc$$

phosphor.

Detailed description of the invention

The divalent europium activated barium fluorohalide phosphor of the present invention has the formula (I):

$$BaFX \cdot aNaX':xEu^{2+},ySc \qquad (I)$$

in which each of X and X' is at least one halogen selected from the group consisting of Cl, Br and I; and $a$, $x$ and $y$ are numbers satisfying the conditions of $0<a\leqq2.0$, $0<x\leqq0.2$ and $10^{-3}\leqq y\leqq10^{-1}$, respectively.

The phosphor of the invention having the above formula (I) gives stimulated emission when excited with an electromagnetic wave having a wavelength within the region of 450—900 nm after exposure to a radiation such as X-rays. From the viewpoint of the luminance of the stimulated emission and the afterglow characteristics thereof, the number for $y$ in the formula (I) which indicates the amount of scandium is preferably within the range of $10^{-3}\leqq y\leqq10^{-2}$. From the viewpoint of the luminance of stimulated emission, NaX' indicating sodium halide is preferably NaBr, and the number for $a$ indicating the amount of sodium halide is preferably within the range of $10^{-5}\leqq a\leqq5\times10^{-1}$ and more preferably $5\times10^{-4}\leqq a\leqq10^{-2}$.

From the viewpoint of the luminance of stimulated emission, X indicating halogen is preferably at least one element selected from the group consisting of Br and I. As described hereinbefore, the stimulation spectrum of the phosphor of the invention is shown in the wavelength region of 450—900 nm, and the peak wavelength thereof shifts toward the longer wavelength side in such an order of halogen X and Cl, Br and I depending upon the halogen X. Accordingly, further from the viewpoint of matching with a source of stimulating rays such as a He-Ne laser (633 nm) and a semiconductor laser (infrared rays) which are now proposed to employ in practical use, X in the formula (I) is preferably Br and/or I. From the viewpoint of both the luminance of stimulated emission and afterglow characteristics, the number for $x$ in the formula (I) which indicates the amount of europium activator is preferably within the range of $10^{-5}\leqq x\leqq10^{-2}$.

A radiation image storage panel having a phosphor layer which comprises

$$BaFBr \cdot 0.0023NaBr:0.001Eu^{2+},ySc$$

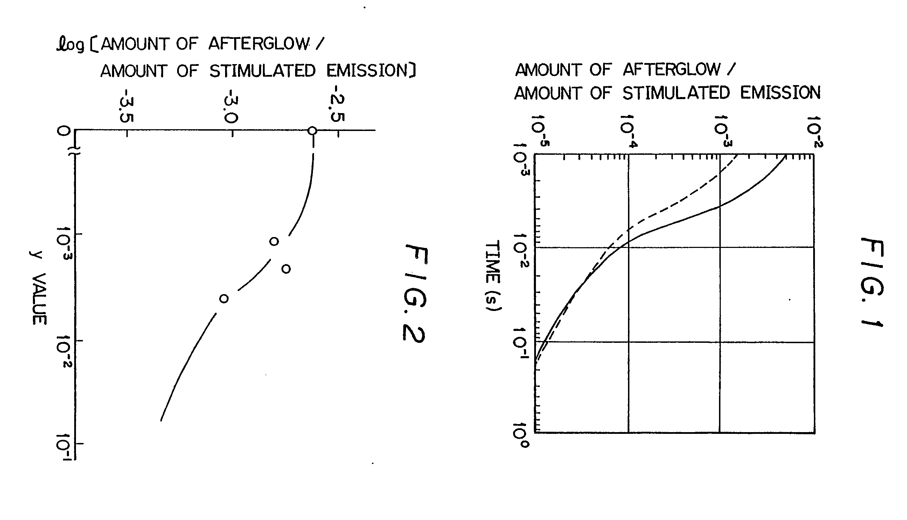

phosphor (an example of the phosphor of the present invention) dispersed in a binder has a relationship between $y$ value indicating an amount of scandium and an amount of afterglow as shown in Figure 2.

Figure 2 graphically shows a relationship between $y$ value and a relative amount of afterglow (logarithmic value of [amount of afterglow/amount of stimulated emission]) measured at $2 \times 10^{-3}$ s. after sccanning with stimulating rays.

As is evident from Figure 2, the radiation image storage panel containing the

$$BaFBr \cdot 0.0023NaBr:0.001Eu^{2+},ySc$$

phosphor is hardly improved in the afterglow characteristics when the amount of scandium ($y$ value) is less than $10^{-3}$. It has been confirmed that the sensitivity of the panel (i.e, the luminance of stimulated emission of the phosphor) is extremely lowered when the $y$ value exceeds $10^{-1}$, though the afterglow characteristics are improved (that is, the relative amount of afterglow is reduced).

It has been further confirmed that radiation image storage panels employing other divalent europium activated barium fluorohalide phosphors having the formula (I) than the above-mentioned one have the same tendencies on the afterglow characteristics and sensitivity as described above.

The amount of scandium ($y$ value) contained in the phosphor is preferred to be small from the viewpoint of absorption efficiency of the resulting phosphor to a radiation such as X-rays and hygroscopic property thereof. Considering these facts, the $y$ value range for the phosphor of the invention is decided as $10^{-3} \leqq y \leqq 10^{-1}$, and preferably as $10^{-3} \leqq y \leqq 10^{-2}$.

The divalent europium activated barium fluorohalide phoshphor of the present invention basically has the above-mentioned formula (I), and other various components may be further incorporated into the phosphor in the preparation thereof, so far as they do not reduce the effect based on the incorporation of Sc (i.e., the improvement of afterglow characteristics). Phosphors containing such additive components are included in the phosphor of the invention. Examples of the additive component included the following substances:

metal oxides as described in Japanese Patent Provisional Publication No. 55(1980)—160078;

tetrafluoroboric acid compounds as described in U.S. Patent Application No. 520,215;

hexafluoro compounds as described in U.S. Patent Application No. 502,648;

alkali metal halides ($M^{I}X'$, in which $M^{I}$ is at least one alkali metal selected from the group consisting of Li, K, Rb and Cs; and X' is at least one halogen selected from the group consisting of F, Cl, Br and I), divalent metal halides ($M^{II}X''_2$, in which $M^{II}$ is at least one divalent metal selected from the group consisting of Be and Mg; and X'' is at least one halogen selected from the group consisting of F, Cl, Br and I) and trivalent metal halides ($M^{III}X'''_3$, in which $M^{III}$ is at least one trivalent metal selected from the group consisting of Al, Ga, In and Tl; and X''' is at least one halogen selected from the group consisting of F, Cl, Br and I), as described in U.S. Patent Application No. 543,326;

zirconium as described in Japanese Patent Provisional Publication No. 56(1981)-116777;

boron as described in Japanese Patent Provisional Publication No. 57(1982)-23673;

arsenic and silicon as described in Japanese Patent Provisional Publication No. 57(1982)-23675; and

transition metals as described in U.S. Patent Application No. 535,928.

The incorporation of metal oxides as described in the above-mentioned Japanese Patent Provisional Publication No. 55(1980)-160078 is particularly effective to prevent the sintering of a phosphor in the firing stage of the preparation thereof and to enhance the luminance of stimulated emission of the phosphor and the flowability thereof. The metal oxide is generally incorporated in an amount of $5 \times 10^{-5}$—0.5 mol per 1 mol of BaFX, preferably $10^{-5}$—0.3 mol, and more preferably $10^{-4}$—0.2 mol. The preferred metal oxides are $SiO_2$ and $Al_2O_3$.

The divalent europium activated barium fluorohalide phosphor of the present invention having the formula (I) can be prepared, for instance, by a process described below.

As the starting materials, the following materials (1) to (4) can be employed:

(1) barium fluoride;

(2) barium halide (except barium fluoride);

(3) scandium compound;

(4) sodium halide (except sodium fluoride); and

(5) at least one compound selected from the group consisting of europium compounds such as europium halide, europium oxide, europium nitrate and europium sulfate. Further, ammonium halide may be employed as a flux. The above scandium compound (3) is preferably a scandium halide.

In the first place, the above-mentioned starting materials (1) to (5) are mixed in the stoichiometric ratio corresponding to the formula (II):

$$BaFX \cdot aNaX':xEu,ySc \qquad (II)$$

in which X, X', $a$, $x$ and $y$ have the same meanings as defined hereinbefore.

The mixing procedure is conducted, for instance, by mixing the starting materials in the form of a suspension. From the suspension of the starting material mixture, the solvent (e.g. water) is removed to obtain a dry mixture in a solid form. The removal of solvent is preferably conducted at room temperature or not so high temperature (for instance, not higher than 200°C) by drying under reduced pressure and/or vacuum. The mixing procedure is by no means restricted to this one.

As a modification, there may be employed a procedure of mixing the starting materials (1), (2) and (5) in the form of a suspension, drying the suspension, and then adding the scandium compound (3) and sodium halide (4) to the dry mixture.

In the second place, the obtained dry mixture is finely pulverized, and the pulverized mixture is then placed in a heat-resistant container such as a quartz boat or an alumina crucible and fired in an electric furnace. The temperature for the firing suitably ranges from 500 to 1300°C. The firing period is determined depending upon the amount of the mixture of starting materials, the firing temperature, etc., and suitably ranges from 0.5 to 6 hours. As the firing atmosphere, there can be employed a weak reducing atmosphere such as a nitrogen gas atmosphere containing a small amount of hydrogen gas or a carbon dioxide gas temperature containing carbon monoxide gas. When the employed europium compound contains trivalent europium, the trivalent europium is reduced to divalent europium under the weak reducing atmosphere in the firing stage.

After firing the mixture of starting materials for the phosphor as described above, the fired product is taken out of the electric furnace, allowed to stand for cooling and pulverized. The pulverized product may be further fired (second firing). The second firing is conducted at a temperature of 500—800°C for 0.5—12 hours in an inert atmosphere such as a nitrogen gas atmosphere or an argon gas atmosphere, or in the above-mentioned weak reducing atmosphere.

After the firing is complete, a powdery phosphor is obtained. The obtained phosphor may be processed in a conventional manner involving a variety of procedures for the preparation of phosphors such as a washing procedure, a drying procedure and a sieving procedure, if desired.

In the case that the phosphor of the present invention contains such additive components as described above, the additive components are incorporated into the suspension in the mixing procedure of the starting materials for the phosphor or into the dry mixture prior to the firing stage.

The above-described process gives the aforementioned divalent eruopium activated barium fulorohalide phosphor having the formula (I).

The radiation image storage panel of the present invention will be described hereinafter.

The radiation image storage panel basically comprises a support and a phosphor layer provided thereon comprises a binder and a stimulable phosphor dispersed therein. The phosphor layer can be formed on the support, for instance, by the following procedure.

In the first place, particles of the stimulable phosphor having the formula (I) and a binder are added to an appropriate solvent, and then they are mixed to prepare a coating dispersion which comprises the phosphor particles homogeneously dispersed in the binder solution.

Examples of the binder to be contained in the phosphor layer include: natural polymers such as proteins (e.g. gelatin), polysaccharides (e.g. dextran) and gum arabic; and synthetic polymers uuch as polyvinyl butyral, polyvinyl acetate, nitrocellulose, ethylcellulose, vinylidene chloride-vinylchloride copolymer, polymethyl methacrylate, vinyl chloride-vinyl acetate copolymer, polyurethane, cellulose acetate butyrate, polyvinyl alcohol, and linear polyester. Among these binders, particularly preferred are nitrocellulose, linear polyester, polyalkyl (meth)acrylate, a mixture of nitrocellulose and linear polyester, and a mixture of nitrocellulose and polyalkyl (meth)acrylate. These binders may be crosslinked with a crosslinking agent.

Examples of the solvent employable in the preparation of the coating dispersion include lower alcohols such as methanol, ethanol, n-propanol and n-butanol; chlorinated hydrocarbons such as methylene chloride and ethylene chloride; ketones such as acetone, methyl ethyl ketone and methyl isobutyl ketone; esters of lower alcohols with lower aliphatic acids such as methyl acetate, ethyl acetate and butyl acetate; ethers such as dioxane, ethylene glycol monoethylether and ethylene glycol monoethyl ether; and mixtures of the above-mentioned compounds.

The mixing ratio of the binder to the stimulable phosphor in the coating dispersion can be determined according to the characteristics of the aimed radiation image storage panel and the nature of the phosphor employed. Generally, the ratio is within the range of from 1:1 to 1:100 (binder:phosphor, by weight), preferably from 1:8 to 1:40.

The coating dispersion may contain a dispersing agent to improve the dispersibility of the phosphor particles therein, and may contain a variety of additives such as a plasticizer for increasing the bonding beween the binder and the phosphor particles in the phosphor layer. Examples of the dispersing agent include phthalic acid, stearic acid, caproic acid and a hydrophobic surface active agent. Examples of the plasticizer include phosphates such as triphenyl phosphate, tricresyl phosphate and diphenyl phosphate; phthalates such as diethyl phthalate and dimethoxyethyl phthalate; glycolates such as ethylphthalyl ethyl glycolate and butylphthalyl butyl glycolate; and polyesters of polyethylene glycols with aliphatic dicarboxylic acids such as polyester of triethylene glycol with adipic acid and polyester of diethylene glycol with succinic acid.

The coating dispersion containing the phosphor particles and the binder prepared as described above is applied evenly onto the surface of a support to form a layer of the coating dispersion. The coating procedure can be carried out by a conventional method such as a method using a doctor blade, a roll coater or a knife coater.

After applying the coating dispersion onto the support, the coating dispersion is then heated slowly to dryness so as to complete the formation of the phosphor layer. The thickness of the phosphor layer varies depending upon the characteristics of the aimed radiation image storage panel, the nature of the phosphor, the ratio of the binder to the phosphor. In general, the thickness of the phosphor layer is within a range of from 20 μm to 1 mm, and preferably within a range of from 50 to 500 μm.

The phosphor layer can be provided onto the support by the methods other than that given in the above. For instance, the phosphor layer is initally prepared on a sheet material such as a glass plate, a metal plate or a plastic sheet using the aforementioned coating dispersion and then thus prepared phosphor layer is superposed on the genuine support by pressing or using an adhesive agent.

The phosphor layer may consist of either a single layer or plural (two or more) layers. In the case of two or more phosphor layers, at least one layer contains the aforementioned divalent europium activated barium fluorohalide phosphor. In any cases of a single and plural layers, a variety of known stimulable phosphors can be employed in combination with the above phosphor.

The support material employed in the present invention can be selected from those employable for the radiographic intensifying screens in the conventional radiography or those employable for the known radiation image storage panel. Examples of the support material include plastic films such as films of cellulose acetate, polyester, polyethylene terephthalate, polyamide, polyimide, triacetate and polycarbonate; metal sheets such as aluminum foil and aluminum alloy foil; ordinary papers; baryta paper; resin-coated papers; pigment papers containing titanium dioxide; and papers sized with polyvinyl alcohol. From the viewpoint of characteristics of a radiation image storage panel as an information recording material, a plastic film is preferably employed as the support material of the invention. The plastic film may contain a light-absorbing material such as carbon black, or may contain a light-reflecting material such as titanium dioxide. The former is appropriate for preparing a high-sharpness type radiation image storage panel, while the latter is appropriate for preparing a high-sensitivity type radiation image storage panel.

In the preparation of a conventional radiation image storage panel, one or more additional layers are occasionally provided between the support and the phosphor layer so as to enhance the bonding strength between the support and the phosphor layer, or to improve the sensitivity of the panel or the quality of an image provided thereby (sharpness and graininess). For instance, a subbing layer or an adhesive layer may be provided by coating polymer material such as gelatin over the surface of the support on the phosphor layer-side. Otherwise, a light-reflecting layer or a light-absorbing layer may be provided by forming a polymer material layer containing a light-reflecting material such as titanium dioxide or a light-absorbing material such as carbon black. In the present invention, one or more of these additional layers may be provided on the support.

As described in U.S. Patent Application No. 496,278, the phosphor layer-side surface of the support (or the surface of an adhesive layer, light-reflecting layer, or light-absorbing layer in the case where such layers provided on the phosphor layer) may be provided with protruded and depressed portions for the enhancement of the sharpness of resulting image.

The radiation image storage panel generally has a transparent protective film on a free surface of a phosphor layer (not facing a support) to protect the phosphor layer from physical and chemical deterioration. In the radiation image storage panel of the present invention, it is preferable to provide a transparent protective film for the same purpose.

The protective film can be provided onto the phosphor layer by coating the surface of the phosphor layer with a solution of a transparent polymer such as a cellulose derivative (e.g., cellulose acetate or nitrocellulose), or a synthetic polymer (e.g., polymethyl methacrylate, polyvinyl butyral, polyvinyl formal, polycarbonate, polyvinyl acetate, or vinyl chloride-vinyl acetate copolymer), and drying the coated solution. Alternatively, the protective film can be provided onto the phosphor layer by beforehand preparing it from a polymer such as polyethylene terephthalate, polyethylene, polyvinylidene chloride or polyamide, followed by placing and fixing it onto the phosphor layer with an adhesive agent. The transparent protective film preferably has a thickness within the range of approx. 3 to 20 μm.

For the enhancement of sharpness of the resulting image, at least a portion of the radiation image storage panel may be colored with a colorant, as described in U.S. Patent No. 4,394,581 and U.S. Patent Application No. 326,624. For the same purpose, the phosphor layer of the radiation image storage panel according to the present invention may contain a white powder, as described in U.S. Patent No. 4,350,893.

The present invention will be illustrated by the following examples and comparison examples, but these examples by no means restrict the invention.

Example 1

To 500 ml of distilled water ($H_2O$) were added 175.34 g of barium fluoride ($BaF_2$), 333.18 g of barium bromide ($BaBr_2 \cdot 2H_2O$), and 0.783 g of europium bromide ($EuBr_3$), and they were mixed to give a suspension. The suspension was dried at 60°C under reduced pressure for 3 hours and further dried at 150°C under vacuum for another 3 hours. The dry product was finely pulverized in a motar. To 100 g of thus pulverized product were then added 0.216 g of scandium fluoride ($ScF_3$) and 0.1 g of sodium bromide (NaBr), and they were mixed to prepare a mixture of starting materials for a phosphor.

Then, the mixture of the starting materials was placed in an alumina crucible, which was, in turn, placed in a high-temperature electric furnace for firing. The firing was done at 900°C for 1.5 hours in a carbon dioxide gas atmosphere containing carbon monoxide gas. After the firing was complete, the crucible was taken out of the furnace and allowed to stand for cooling. The fired product was pulverized to obtain a powdery divalent europium activated barium fluorobromide phosphor

$$BaFBr \cdot 0.0023NaBr:0.001Eu^{2+},0.005Sc).$$

Further, a variety of divalent europium activated barium fluorobromide phosphors containing the different amount of scandium were obtained by varying the amount of scandium fluoride to be added within the range of $10^{-4}$—$10^{-1}$ mol per 1 mol of BaFBr in the above-described preparation of the phosphor.

Subsequently, using the obtained phosphors, a variety of radiation image storage panels were prepared in the following manner.

To a mixture of the phosphor particles and a linear polyester resin were successively added methyl ethyl ketone and nitrocellulose (nitrification degree: 11.5%), to prepare a dispersion containing the phosphor particles. Then, tricresyl phosphate, n-butanol and methyl ethyl ketone were added to the dispersion, and the mixture was sufficiently stirred by means of a propeller agitator to obtain a homogeneous coating dispersion containing the binder and the phosphor particles in the ratio of 1:20 (binder:phosphor, by weight) and having a viscosity of 25—35 Pa·s (at 25°C).

Then, the coating dispersion was applied onto a polyethylene terephthalate sheet containing carbon black (support, thickness: 250 μm) placed horizontally on a glass plate. The application of the coating dispersion was carried out using a doctor blade. After the coating was complete, the support having the coating dispersion was placed in an oven and heated at a temperature gradually rising from 25 to 100°C. Thus, a phosphor layer having the thickness of 200 μm was formed on the support.

On the phosphor layer was placed a transparent polyethylene terephthalate film (thickness: 12 μm; provided with a polyester adhesive layer) to combine the film and the phosphor layer with the adhesive layer. Thus, a radiation image storage panel consisting essentially of a support, a phosphor layer and a transparent protective film was prepared.

Comparison Example 1

The procedure of Example 1 was repeated except for adding no scandium fluoride to obtain a powdery divalent europium activated barium fluorobromide phosphor

$$BaFBr \cdot 0.0023NaBr:0.001Eu^{2+}).$$

Using thus obtained phosphor particles, a radiation image stored panel consisting essentially of a support, a phosphor layer and a transparent protective film was prepared in the same manner as described in Example 1.

The radiation image storage panels prepared in Example 1 and Comparison Example 1 were evaluated on the afterglow characteristics according to the following test.

The radiation image storage panel was cut to give a test strip having a width of 7 cm. The test strip was exposed to X-rays at 80 kV and subsequently once scanned with a He-Ne laser beam (wavelength: 632.8 nm) in the direction of its width for $5\times10^{-3}$ s. to measure the decay of afterglow of the stimualted emission.

The results of the evaluation on the afterglow characteristics are graphically illustrated in Figures 1 and 2.

Figure 1 illustrates graphs (decay curves of afterglow) in which the time is plotted as the abscissa and [amount of afterglow/amount of stimulated emission] as the ordinate:

Dotted curve: the radiation image storage panel containing

$$BaFBr \cdot 0.0023NaBr:0.001Eu^{2+},0.005Sc$$

phosphor, and

Solid curve: the radiation image storage panel containing

$$BaFBr \cdot 0.0023NaBr:0.001Eu^{2+}$$

phosphor.

Figure 2 illustrates a graph in which the amount of scandium (y value) is plotted as the abscissa and the logarithmic value of [amount of afterglow/amount of stimulated emission] as the ordinate. The amount of afterglow is a value measured at $2\times10^{-3}$ s. after exposure to a He-Ne laser beam.

Example 2

The procedure of Example 1 was repeated except for adding 0.15 g of silicon dioxide ($SiO_2$) in addition to scandium fluoride and sodium bromide to 100 g of the pulverized product, to obtain a powdery divalent europium activated barium fluorobromide phosphor

$$BaFBr \cdot 0.0023NaBr- \cdot 0.006SiO_2:0.001Eu^{2+},0.005Sc).$$

Using thus obtained phosphor particles, a radiation image storage panel consisting essentially of a support, a phosphor layer and a transparent protective film was prepared in the same manner as described in Example 1.

The radiation image storage panel prepared in Example 2 was evaluated on the afterglow characteristics by the above-described test.

As a result, the logarithmic value of [amount of afterglow/amount of stimulated emission] was −3.1 for the radiation image storage panel of the present invention containing

$$BaFBr \cdot 0.0023NaBr \cdot 0.006SiO_2:0.001Eu^{2+},0.005Sc$$

phosphor, though −2.6 for the radiation image storage panel of Comparison Example 1 containing

$$BaFBr \cdot 0.0023NaBr \cdot :0.001Eu^{2+}$$

phosphor (see Figure 2).

## Claims

1. A divalent europium activated barium fluorohalide phosphor having the formula (I):

$$BaFX \cdot aNaX':xEu^{2+},ySc \qquad (I)$$

in which each of X and X′ is at least one halogen selected from the group consisting of Cl, Br, and I; and $a$, $x$ and $y$ are numbers satisfying the conditions of $0<a\leqq2.0$, $0<x\leqq0.2$ and $10^{-3}\leqq y\leqq10^{-1}$, respectively.

2. The phosphor as claimed in Claim 1, in which $y$ in the formula (I) is a number satisfying the condition of $10^{-3}\leqq y\leqq10^{-2}$.

3. The phosphor as claimed in Claim 1, in which $a$ in the formula (I) is a number satisfying the condition of $10^{-5}\leqq a\leqq10^{-1}$.

4. The phosphor as claimed in Claim 3, in which $a$ in the formula (I) is a number satisfying the condition of $5\times10^{-4}\leqq a\leqq10^{-2}$.

5. The phosphor as claimed in Claim 1, in which X in the formula (I) is at least one halogen selected from the group consisting of Br and I.

6. The phosphor as claimed in Claim 1, in which X′ in the formula (I) is Br.

7. A radiation image storage panel comprising a support and a stimulable phosphor layer provided thereon, characterized in that said stimulable phosphor layer contains a divalent europium activated barium fluorohalide phosphor having the formula (I):

$$BaFX \cdot aNaX':xEu^{2+},ySc \qquad (I)$$

in which each of X and X′ is at least one halogen selected from the group consisting of Cl, Br and I; and $a$, $x$ and $y$ are numbers satisfying the conditions of $0<a\leqq2.0$, $0<x\leqq0.2$ and $10^{-3}\leqq y\leqq10^{-1}$, respectively.

8. The radiation image storage panel as claimed in Claim 7, in which $y$ in the formula (I) is a number satisfying the condition of $10^{-3}\leqq y\leqq10^{-2}$.

9. The radiation image storage panel as claimed in Claim 7, in which $a$ in the formula (I) is a number satisfying the condition of $10^{-5}\leqq a\leqq10^{-1}$.

10. The radiation image storage panel as claimed in Claim 9, in which $a$ in the formula (I) is a number satisfying the condition of $5\times10^{-4}\leqq a\leqq10^{-2}$.

11. The radiation image storage panel as claimed in Claim 7, in which X in the formula (I) is at least one halogen selected from the group consisting of Br and I.

12. The radiation image storage panel as claimed in Claim 7, in which X′ in the formula (I) is Br.

## Patentansprüche

1. Zweiwertiger europiumaktivierter Bariumfluorhalogenidleuchtstoff der Formel (I):

$$BaFX \cdot aNaX':xEu^{2+},ySc \qquad (I)$$

worin jedes X und X′ wenigstens ein Halogen, gewählt aus der Gruppe, bestehend aus Cl, Br und I, ist; und a, x und y Zahlen sind, die den Bedingungen $0<a<2,0$, $0<x<0,2$ und $10^{-3}<y<10^{-1}$ entsprechen.

2. Leuchtstoff nach Anspruch 1, worin y in der Formel (I) eine Zahl ist, die der Bedingung $10^{63}<y<10^{-2}$ genügt.

3. Leuchtstoff nach Anspruch 1, worin a in der Formel (I) eine Zahl ist, die der Bedingung $10^{-5}<a<10^{-1}$ genügt.

4. Leuchtststoff nach Anspruch 3, worin a in der Formel (I) eine Zahl ist, die der Bedingung $5\times10^{-4}<a<10^{-2}$ genügt.

5. Leuchtstoff nach Anspruch 1, worin X in der Formel (I) wenigstens ein Halogen, gewählt aus der Gruppe, bestehend aus Br und I, ist.

6. Leuchtstoff nach Anspruch 1, worin X′ in der Formel (I) Br ist.

7. Strahlungsbildspeicherplatte bzw. -tafel, umfassend einen Träger und eine darauf vorgesehene anregbare Leuchtstoffschicht, dadurch gekennzeichnet, daß die anregbare Leuchtststoffschicht einen zweiwertigen europiumaktivierten Bariumfluorhalogenidleuchtstoff der Formel (I):

$$BaFX \cdot aNaX':xEu^{2+},ySc \qquad (I)$$

enthält, worin jedes X und X′ wenigstens ein Halogen, gewählt aus der Gruppe, bestehend aus Cl, Br und I, ist; und a, x und y Zahlen sind, die den Bedingungen $0<a<2,0$, $0<x<0,2$ und $10^{-3}<y<10^{-1}$ genügen.

8. Strahlungsbildspeicherplatte nach Anspruch 7, worin y in der Formel (I) ein Zahl ist, die der Bedingung $10^{-3}<y<10^{-2}$ genügt.

9. Strahlungsbildspeicherplatte nach Anspruch 7, worin a in der Formel (I) ein Zahl ist, die der Bedingung $10^{-5}<a<10^{-1}$ genügt.

10. Strahlungsbildspeicherplatte nach Anspruch 9, worin a in der Formel (I) eine Zahl ist, die der Bedingung $5\times10^{-4}<a<10^{-2}$ genügt.

11. Strahlungsbildspeicherplatte nach Anspruch 7, worin X in der Formel (I) wenigstens ein Halogen, gewählt aus der Gruppe, bestehend aus Br und I, ist.

12. Strahlungsbildspeicherplatte nach Anspruch 7, worin X' in der Formel (I) Br ist.

**Revendications**

1. Un produit luminescent constitué d'un fluorohalogénure de baryum activé par de l'europium divalent, ayant la formule (I):

$$BaFX \cdot aNaX':xEu^{2+},ySc \qquad (I)$$

dans laquelle chacun de X et de X', est au moins un halogène choisi dans le groupe constitué de Cl Br et I; et $a$, $x$ et $y$ sont des nombres satisfaisant les conditions $0 < a \leq 2,0$, $0 < x \leq 0,2$ et $10^{-3} \leq y \leq 10^{-1}$, respectivement.

2. Le produit luminescent revendiqué dans la revendication 1, dans lequel $y$ de la formule (I) est un nombre satisfaisant la condition $10^{-3} \leq y \leq 10^{-2}$.

3. Le produit luminescent revendiqué dans la revendication 1, dans lequel $a$ de la formule (I) est un nombre satisfaisant la condition $10^{-5} \leq a \leq 10^{-1}$.

4. Le produit luminescent revendiqué dans la revendication 3, dans lequel $a$ de la formule (I) est un nombre satisfaisant la condition $5 \times 10^{-4} \leq a \leq 10^{-2}$.

5. Le produit luminescent revendiqué dans la revendication 1, dans lequel X de la formule (I) est au moins un halogène choisi dans le groupe constitué de Br et I.

6. Le produit luminescent revendiqué dans la revendication 1, dans lequel X' de la formule (I) est Br.

7. Panneau d'enregistrement d'une image obtenue par rayonnement comportant un support et une couche de produit luminescent stimulable prévue sur le support, caractérisé en ce que ladite couche de produit luminescent stimulable contient un produit luminescent constitué d'un fluorohalogénure de baryum activé par de l'europium divalent, ayant la formule (I):

$$BaFX \cdot aNaX':xEu^{2+}ySc \qquad (I)$$

dans lequel chacun de X et de X', est au moins un halogène choisi dans le groupe constitué de Cl, Br et I; et $a$, $x$ et $y$ sont des nombres satisfaisant les conditions $0 < a \leq 2,0$, $0 < x \leq 0,2$ et $10^{-3} \leq y \leq 10^{-1}$.

8. Panneau d'enregistrement d'une image obenue par rayonnement selon la revendication 7, dans lequel $y$ de la formule (I) est un nombre satisfaisant la condition $10^{-3} \leq y \leq 10^{-2}$.

9. Panneau d'enregistrement d'une image obtenue par rayonnement selon la revendication 7, dans lequel $a$ de la formule (I) est un nombre satisfaisant la condition $10^{-5} \leq a \leq 10^{-1}$.

10. Panneau d'enregistrement d'une image obtenue par rayonnement selon la revendication 9, dans lequel $a$ de la formule (I) est un nombre satisfaisant la condition $5 \times 10^{-4} \leq a \leq 10^{-2}$.

11. Panneau d'enregistrement d'une image obtenue par rayonnement selon la revendication 7, dans lequel X de la formule (I) est au moins un halogène choisi dans le groupe constitué de Br et I.

12. Peanneau d'enregistrement d'une image obtenue par rayonnement selon la revendication 7 dans lequel X' de la formule (I) est Br.

## F I G. 1

## F I G. 2

1